# EUROPEAN PATENT APPLICATION

(11) **EP 4 545 784 A1**
(43) Date of publication of application: **30.04.2025**
(21) Application number: 23206173.9
(22) Date of filing: 26.10.2023
(51) Int. Cl.: F03D 9/19, F03D 80/00

(54) **METHOD FOR STORING AT LEAST ONE PIPE OF A STATIONARY OFFSHORE DEVICE AND STATIONARY OFFSHORE DEVICE**

(71) Applicant: Siemens Gamesa Renewable Energy A/S, 7330 Brande (DK)
(72) Inventor: Ellgaard, Jonas Balslev, 7330 Brande (DK); Fester, Chris, 6100 Haderslev (DK)
(74) Representative: SGRE-Association

(57) **Abstract**

Method for storing at least one pipe (13) of a stationary offshore device (1), particularly being a wind turbine (2), by bringing the at least one pipe (13) from a functional state into a storing state, wherein the method comprises the following steps:
- dismounting the at least one pipe (13) being in the functional state in which it constitutes a component of a conveying arrangement (9) for conveying a fluid through the at least one pipe (13),
- bringing the at least one pipe (13) into the storing state in which it is removably held by at least one suspension device (16) such that the at least one pipe (13) is suspended from a platform (7) of the offshore device (1).

## Description

The present invention relates to a method for storing at least one pipe of a stationary offshore device, particularly being a wind turbine, by bringing the at least one pipe from a functional state into a storing state. Additionally, the present invention relates to a stationary offshore device, particularly being a wind turbine, comprising at least one pipe which can be brought from a functional state into a storing state.

On offshore devices, pipes are used in a variety of different ways. Depending on their use and arrangement, pipes are often susceptible for mechanical wear and tear and/or for marine growth and/or and for corrosion. In order to deal with these problems, pipes usually must be maintained. To do so, the pipes are usually dismounted and then temporarily stored one the offshore device.

Typically, pipes are stored in a working area of a platform of the offshore device which is used as a working space or walkways for personnel. Particularly offshore platforms, however, only provide a limited space. This potentially causes problems, for instance if the pipe storage requires too much space on the platform.

It is therefore an object of the present invention to provide an enhanced concept for storing at least one pipe of a stationary offshore device, particularly regarding the aspect of saving space.

This object is achieved by a method according to claim 1 and by a stationary offshore device according to 13. Advantageous embodiments of the invention are provided by a method according to one or several of the dependent claims.

Thus, according to the present invention, the method as described initially comprises the following steps:
- dismounting the at least one pipe being in the functional state in which it constitutes a component of a conveying arrangement for conveying a fluid through the at least one pipe,
- bringing the at least one pipe into the storing state in which it is removably held by at least one suspension device such that the at least one pipe is suspended from a platform of the offshore device.

The functional state is a state in which the respective pipe is in a functional position and mounted to another pipe and/or another component of the conveying arrangement. The conveying arrangement can comprise a plurality of pipes, wherein the pipes can be, when being in their functional states, mounted on each other to constitute a pipework. The conveying arrangement can comprise further components like pumps and/or filters and/or measuring units or the like. Particularly, the conveying arrangement is only ready for operation or use, if all components of the conveying arrangement, particularly the at least one pipe, are in their functional states.

In the first step of the method, which can also be denoted as a dismounting step, the pipe being in the functional state is dismounted. Particularly, the pipe is detached from the other pipe(s) and/or component(s) of the conveying arrangement. Next, the second step, which can also be denoted as a storing step, is performed. In the storing step, the pipe can be moved away from the functional position into a storing position. Then, the pipe can be connected to the suspension device, particularly attached to it.

In the storing state, the at least one pipe is removably held by the at least one suspension device such that it is suspended from the platform of the offshore device. When being in the storing state, the respective pipe is in a non-horizonal position, particularly in a vertical or tilted position, wherein the suspension device interacts with an upper section of this pipe to hold it in position. In other words, the at least one pipe being in the storing state hangs down from the platform or the suspension device, respectively.

The at least one pipe being in the storing state may be attached to the platform or to the suspension device, respectively. It can be fixedly attached such that no relative movement between the pipe and the platform or the suspension device, respectively is allowed. It can be freely attached such that a relative movement between the pipe and the platform or the suspension device, for instance a pendulum motion, is allowed.

The platform can include or host most of the facilities of the offshore device. Typically, the platform is arranged above sea level and carried by a pile, in particular a monopile or a tripod or the like, which fixates the platform to a seabed. For example, the platform is arranged 70 m above the seabed and about 15 m above sea level.

The at least one pipe being in the storing state can be arranged on the platform such that it is arranged directly above the sea surface, i.e., without having a further component of the offshore device arranged between the suspended pipe and the sea water. It is preferred that a significant part, particularly more than one half, of the at least one pipe being in the storing state is arranged between the platform and a sea level. Hence, preferably a significant part of the at least one pipe being in the storing state is arranged below the platform. This is advantageous, because the space between the platform and the sea level is used to store the pipe(s). It can therefore be avoided to store the pipe(s) in a working area of the platform which is space consuming.

Preferably, the at least one pipe comprises at least one flange, wherein the flange or one of the flanges of the at least one pipe being in the storing state rests on at least one holding member of the at least one suspension device. The flange can radially project from the remaining pipe, particularly from a tubular duct section of the pipe. The flange can comprise a, particularly flat, flange surface which is preferably oriented perpendicular to the duct section or an elongation or axial extent of the pipe. The at least one flange can be used for connecting the at least one pipe to another pipe comprising such flange. Hence, the flange can be used, on the one hand, as a means for connecting the respective pipe being in the functional state to the remainder of the conveying arrangement and, on the other hand, as a means for connecting this pipe being in the storing state to the suspension device. The at least one holding member may have or be a flat surface, which the at least one flange, particularly its flange surface, rests on, when the at least one pipe is in the storing state.

When the at least one pipe is in the storing sate, the at least one holding member preferably supports the flange or one of the flanges from below. The at least one flange may preferably rest on the at least one holding member and may be pressed onto the at least one holding member by the own weight of the pipe. Hence, a very simple way of storing the at least one pipe is provided, which makes use of the difference in diameter regarding the at least one flange and the remaining pipe.

Particularly, the at least one pipe, having particularly a straight extent, comprises two flanges being arranged on its opposed longitudinal ends. This is advantageous, because each flange can be used for connecting another pipe. Hence, a large pipe arrangement or pipework can be realized using several such pipes. Particularly in this embodiment, the pipes can constitute a rise pipe which extends from the platform down below the sea level. Axial end pipes of the rise pipe can comprise blind flanges which close the respective pipe.

The at least one suspension device can comprise two plate- or bar-like holding members having a gap in between, wherein the at least one pipe being in the storing state hangs through the gap. The two plate- or bar-like holding members may preferably be arranged on the opposing sides of the respective pipe. In the storing state, the flange or one of the flanges of the respective pipe may rest on both holding members, wherein the pipe hangs through the gap and downwards from the platform oriented towards the sea. Each of the holding members can comprise an edge, wherein the edges of the holding members which delimit the gap are faced towards each other and extend particularly parallel to each other. The holding members are preferably oriented horizontally.

Regarding the embodiment where the at least one pipe comprises two flanges, being particularly arranged on its opposed longitudinal ends, the pipe can comprise two equally shaped, particularly circular, flanges. Particularly in this embodiment, the gap can comprise, regarding its longitudinal extent, a broad section and a narrow section. In this embodiment, one of the longitudinal ends of the at least one pipe is lowered through the gap in the broad section, wherein the at least one pipe is moved into the narrow section, wherein the at least one pipe is lowered such that the flange or one of the flanges comes to rest upon the holding members. These steps are performed subsequently. The pipe may be arranged vertical or inclined during this process. The width of the gap in the broad section should be sized such that the flange which is lowered and guided through the gap can pass the broad section, particularly without contacting a boarder of the gap. The width of the gap in the narrow section should be sized such that the flange which comes to rest upon the holding members cannot be moved through the gap at this section. Hence, the broad section can be used for inserting the at least one pipe into the gap and the narrow section can be used for storing the at least one pipe. In other words, the method according to this embodiment comprises, firstly, lowering one of the longitudinal ends comprising one of the flanges of the pipe, particularly vertically, through the broad section of the gap. Secondly, moving the at least one pipe, particularly horizontally, to the narrow section. Thirdly, lowering the pipe, particularly vertically, until the other flange of this pipe comes to rest upon the holding members. Preferably, the gap width in the broad section is larger than the diameter of the, particularly circular, flanges and the gap width in the narrow section is smaller than the diameter of the, particularly circular, flanges and broader than the diameter of the duct section of the pipe.

According to a possible embodiment, the gap can comprise, regarding its longitudinal extent, at least one open end, wherein the at least one pipe is positioned outside of the gap and in front of its open end, wherein the at least one pipe is moved into the gap, wherein the at least one pipe is lowered such that the flange or one of the flanges comes to rest upon the holding members. These steps are performed subsequently. The pipe may be arranged vertical or inclined during this process. The width of the gap should be sized such that the flange of the pipe which comes to rest upon the holding members cannot be moved through the gap at this section. In order to store the pipe, it is inserted into the gap sideways. The at least one pipe can be, particularly horizontally, moved into the gap through its open end. One of the flanges of the at least one pipe is positioned above the gap such that it comes to rest upon the holding members after the pipe is lower into the storing state. Preferably, the at least one pipe is, firstly, horizontally moved into the gap and then, secondly, vertically lowered. Preferably, the gap width is smaller than the diameter of the, particularly circular, flanges and broader than the diameter of the remaining section of the pipe.

The at least one suspension device may comprises a supporting device which comprises an opening and which carries the holding members, wherein at least one of the holding members is movably attached on the supporting device, wherein one of the longitudinal ends of the at least one pipe is lowered through the gap and through the opening, wherein the at least one of the holding members being movably attached on the supporting device is moved into a holding position such that the subsequent lowering of the at least one pipe ends up such that the flange or one of the flanges comes to rest upon the holding members and the at least one pipe hangs through the gap and through the opening. A width of the opening of the supporting device can be larger than the width of the flange. As long as the gap between the two holding members is smaller than the flange, the pipe can be supported in the storing state having the flange rested upon the holding members. According to this embodiment, at least one of the holding members is moved, particularly horizontally rotated or pivoted, in order to store the at least one pipe. This movement enables an adjustment of the size of the gap between two holding members. Hence, during the storing step the size of the gap can be adjusted by moving the at least one movably attached holding member.

The at least one movably attached holding member can be moved to an opening position or can be remained in this position to provide a gap or a space between the holding members which is big enough to lower the end portion of the pipe through the gap. Once the end portion of the pipe has been moved through the opening and the gap, the movably attached holding member is moved towards the pipe to reduce the size of the gap or of the space between the holding members until the width of the gap becomes smaller than the flange. The pipe can then be lowered until the flange comes to rest upon the holding members. Those storing steps are performed subsequently.

In the opening position, the at least one movably attached holding member may extend not over the opening and, hence, release or unblock the opening such that the pipe can be lowered through the gap and the opening. In the holding position, the movably attached holding member preferably extends over the opening providing a support on which the flange of the pipe comes to rest upon after lowering the pipe into the storing state.

The holding member may not be attached but removably connected to the supporting device. Preferably, all holding members are movably attached on the support device.

In an embodiment, the supporting device comprises two, particularly parallel, support beams or support plates having the, particularly gap-like, opening in between, wherein one end of the at least one of the holding members being movably attached on the supporting device is pivotably attached to one of the support beams or support plates. Fastening means, for instance bolts, may be provided to attach one axial end of the at least one holding member to the supporting device such that the at least one holding member is movable, particularly pivotable, with respect to the supporting device. In this embodiment, the size of the gap or of the space between the holding members is adjusted by, particularly horizontally, rotating the at least one movably attached holding member with respect to the support beams or support plates.

Preferably, two holding members, at least one of whom is pivotably attached to the supporting device, are provided for storing one pipe. In this case, one longitudinal end of the pipe can be lowered through the opening and the gap and the pipe can be positioned such that both holding members are arranged on opposing sides of the pipe. The movable holding member(s) can then be pivoted towards the pipe until the gap width is smaller than the flange diameter or until the holding member(s), particularly slightly, contact the pipe which can then be lowered into the storing state in which the flange rests upon the holding members. At least one clamping means can be provided to temporarily fixate the current position of the holding member(s).

In an embodiment, the platform, which is particularly carried by the at least one pile, comprises a deck structure and a floor structure which constitute several, particularly horizontal, layers of the platform, wherein the deck structure carries the floor structure, wherein at least a part of the at least one suspension device, particularly the support beams or support plates, is constituted by at least one component of the deck structure. The platform comprises several laminated layers which are arranged vertically above each other. Preferably, the layers extend along an horizontal direction. Each of the layers can constitute a floor. The floor structure preferably constitutes the working area or working space for personnel. Between the layers, particularly between the deck structure and the floor structure, a clearance can be provided such that components of the offshore device can be located there. I.e., the deck structure can constitute a supply area for ductwork and/or cables and/or other supply means. The deck structure can be the structure of the platform which is closest to the sea level, i.e., the lowermost structure. A floor panel or floor plate can be used as the support plate. Additionally or alternatively, a beam which carries floor panels or floor plates can be used as the support beam. Using components of the deck structure as the suspension device, the at least one pipe does not have to be stored on the floor structure.

In a possible embodiment, the floor structure comprises at least one opening device, being or comprising particularly a hatch, wherein the opening device is brought from a closed state, in which it covers the at least one suspension device, into an open state, in which it provides access to the at least one suspension device, hereafter the at least one pipe is brought into the storing state. By providing an opening device which can be brought from the closed into the open state and vice versa, the suspension device can easily be covered or uncovered by opening or closing the opening device. In the closed state, the opening device can constitute one of several floor plates of the floor structure.

The at least one opening device can be in the closed state, after the pipe has been brought into the storing state and/or if no pipe is held by the respective suspension device. The at least one opening device can be a hatch which is pivotable attached to a component of the floor structure, particularly to the beam which carries floor panels. Hence, the hatch can be brought from the open state to the closed state and vice versa by pivoting the hatch. Alternatively, the at least one opening device may be a component of the floor structure which, when brought into the open state, is completely removed from the remaining floor structure. It may be brought back into the original position to bring the opening device back into the closed state.

If several suspension devices are provided, one opening device can be provided to cover all suspension devices when being in the closed state. Alternatively, a plurality of opening devices may be provided, each of which covers one of the suspension devices when being in the closed state.

The floor structure can comprise a floor grating. The at least one opening device, particularly the hatch, can be constituted by a floor plate of the floor grating.

Preferably, that the at least one pipe being in the storing state is fixated to the at least one suspension device, particularly by a bolt and/or a pin. Hence, bringing the pipe into the storing state can comprise the steps of, firstly, moving the pipe into the storing position and, secondly, attaching the pipe to the respective suspension device. As offshore devices are known to be susceptible to environmental impacts, particularly maritime impacts like strong wind, additional fixation is beneficial to provide a secure storage of the at least one pipe. For fixating the pipe to the respective suspension device, at least one bolt or pin, particularly comprising a thread, and at least one nut can be used. Preferably, the flange as well as the suspension device comprises at least one bore hole. The threaded bolt or pin can be inserted into the bore hole and secured by the nut.

The conveying arrangement can comprise a plurality of pipes which are, when being in the functional state, mounted together and about each other, wherein the pipes are dismounted successively by firstly dismounting the uppermost pipe and then lifting the remaining pipe or pipes, wherein this step is repeated until all pipes are dismounted. By repeating this step, the conveying arrangement which comprises a plurality of pipes is dismantled, wherein each of the dismantled pipes can be stored as described above. The conveying arrangement can be a, particularly vertical, rise pipe, preferably being arranged in a caisson, for conveying seawater to the platform, when being in the functional state. For example, the rise pipe can comprise between two and twenty, particularly nine, pipes, each having a length between 0.5 and 10 meters, particularly three meters, and a diameter between 5 and 100 centimeters, particularly between 20 to 40 centimeters.

Next, a concrete example for dismantling the conveying arrangement will be described. In this example, several pipes constitute the conveying arrangement which realizes a rise pipe which leads from the sea to the platform. Exemplarily, the rise pipe is arranged in the caisson. Firstly, the currently uppermost pipe of the conveying arrangement is fixated to a rope of a lift or a crane, in particular by means of an upper flange of the currently uppermost pipe. Then, the conveying arrangement is lifted such that the lower flange of the uppermost pipe, on which the upper flange of the adjacent pipe, which is arranged directly below the uppermost pipe, is mounted, is accessible from the outside of the caisson and/or for personnel being on the floor structure. Next the conveying arrangement can be secured from falling down by means of at least one securing member which is arranged such that the upper flange of the adjacent pipe rests upon the at least one securing member resting upon the caisson. The at least one securing member may be similar or equal to the holding member described above. It may be a beam which can be arranged such that it extends over an upper opening of the caisson which the conveying arrangement is lifted through. Next, the uppermost pipe may be dismantled from the remainder of the conveying arrangement, e.g., by detaching it from the adjacent pipe. For this, a screwing connection, e.g., a bolt-nut-connection, for attaching the lower flange of the uppermost pipe to the upper flange of the adjacent pipe, can be released. Next, the dismounted pipe is brought, particularly moved or lifted, into the storing state. These steps can be repeated until all pipes of the conveying arrangements are dismantled and brought into the storing state.

Preferably, the least one pipe being in the storing state is cleaned. Cleaning means that dirt, in particular maritime growth, is removed from the pipe, particularly from the inside and/or the outside of the pipe. For this, a pressure washer can be used. Since the pipe is suspended from the platform when being in the storing state such that great part of the pipe is arranged below the platform, most of the dirt directly falls into the sea during the cleaning. Hence, the platform will get less dirty which reduces cleaning effort.

Furthermore, the object of the present invention is achieved by a stationary offshore device, particularly being a wind turbine, comprising at least one pipe which can be brought from a functional state into a storing state, wherein the at least one pipe being in the functional state is dismountable and constitutes a component of a conveying arrangement of the offshore device for conveying a fluid through the at least one pipe, wherein the at least one pipe being in the storing state is removably held by at least one suspension device such that the at least one pipe is suspended from a platform of the offshore device.

The method described above may be employed with the offshore device having any of the configurations described herein. All features, advantages and aspects which have been explained with respect to the method according to the present invention can be applied to the offshore device according to the present invention and vice versa.

The offshore device can comprise a lift or crane configured to lift the at least one pipe, particularly from its position on the offshore device when being in the functional state to its position on the offshore device when being in the storing state and vice versa.

The conveying arrangement of the offshore device may be adapted to convey sea water from the sea to a hydrogen generator of the offshore device. Hence, the conveying arrangement or at least a rise pipe of the conveying arrangement can reach downwards from the platform below the sea level, wherein the conveying arrangement may comprise a pump to pump seawater through the at least one pipe to the platform. The seawater conveyed by the conveying arrangement can be used to produce hydrogen which is becoming increasingly relevant for storing electrical energy. The energy needed for supplying the hydrogen generator can be provided by an electric generator of the offshore device being a wind turbine, the energy generated by the wind turbine and/or by nearby wind turbines. Hence, the offshore device according to the present invention can be a component of an offshore wind park.

Since the extend of the conveying arrangement must be big enough to reach from the platform below sea level, the conveying preferably comprises a plurality of pipes which are, when being in the functional state, mounted about each other to constitute the rise pipe.

Preferably, the offshore device comprises at least one pile which is arranged on and/or anchored in the seabed and which carries the platform. The pile is a means to realize the mechanical stability of the offshore device and ensures that that the position of the offshore device remains constant, also if rough sea conditions are present. Preferably, the caisson is arranged on and particularly connected with the pile.

The offshore device according to the present invention can be characterized in that the at least one pipe comprises at least one flange. The flange or one of the flanges of the at least one pipe being in the storing state can rest on at least one holding member of the at least one suspension device.

Furthermore, the at least one pipe, having particularly a straight extent, can comprise two flanges being arranged on its opposed longitudinal ends.

The offshore device according to the present invention can be characterized in that the at least one suspension device (16) comprises two plate- or bar-like holding members having a gap in between, wherein the at least one pipe being in the storing state hangs through the gap.

The gap can comprise, regarding its longitudinal extent, a broad section and a narrow section. The suspension device can be adapted such that one of the longitudinal ends of the at least one pipe can be lowered through the gap in the broad section, wherein the at least one pipe can be moved into the narrow section, wherein the at least one pipe can be lowered such that the flange or one of the flanges comes to rest upon the holding members.

The gap can comprise, regarding its longitudinal extent, at least one open end. The suspension device can be adapted such that the at least one pipe can be positioned outside of the gap and in front of its open end, wherein the at least one pipe can be moved into the gap, wherein the at least one pipe can be lowered such that the flange or one of the flanges comes to rest upon the holding members.

The offshore device according to the present invention can be characterized in that the at least one suspension device comprises a supporting device which comprises an opening and which carries the holding members, wherein at least one of the holding members is movably attached on the supporting device. The suspension device can be adapted such that one of the longitudinal ends of the at least one pipe can be lowered through the gap and through the opening, wherein the at least one of the holding members being movably attached on the supporting device can be moved into a holding position such that the subsequent lowering of the at least one pipe ends up such that the flange or one of the flanges comes to rest upon the holding members and the at least one pipe hangs through the gap (24) and through the opening.

The offshore device according to the present invention can be characterized in that the supporting device comprises two support beams or support plates having the opening in between, wherein one end of the at least one of the holding members being movably attached on the supporting device is pivotably attached to one of the support beams or support plates.

The offshore device according to the present invention can be characterized in that the platform comprises a deck structure and a floor structure which constitute several, particularly horizontal, layers of the platform, wherein the deck structure carries the floor structure, wherein at least a part of the at least one suspension device, particularly the support beams or support plates, is constituted by at least one component of the deck structure.

The floor structure can comprise at least one opening device, being or comprising particularly a hatch, wherein the opening device can be brought from a closed state, in which it covers the at least one suspension device, into an open state, in which it provides access to the at least one suspension device, wherein hereafter the at least one pipe can be brought into the storing state.

The offshore device according to the present invention can be characterized in that the at least one pipe being in the storing state is fixated to the at least one suspension device, particularly by a bolt and/or a pin.

The offshore device according to the present invention can be characterized in that the conveying arrangement comprises a plurality of pipes which are, when being in the functional state, mounted together and about each other. The offshore device can be adapted such that the pipes can be dismounted successively by firstly dismounting the uppermost pipe and the remaining pipe or pipes can be lifted, wherein this step can be repeated until all pipes are dismounted.

It is to be understood that the features mentioned above and yet to be explained below can be used not only in the respective combination indicated, but also in other combinations or in isolation, without leaving the scope of the present invention. In particular, the features of the different aspects of the embodiments of the invention can be combined with each other unless noted to the contrary.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: A schematic side view of an offshore device according to the invention,
- Fig. 2: a schematic side view of a pipe of the offshore device shown in Fig. 1 while being brought into a storing state,
- Fig. 3: the same view as fig. 2, wherein the pipe is in the storing state,
- Fig. 4: a schematic top view of two pipes of the offshore device shown in Fig. 1 with a suspension device comprising two rotatable holding members,
- Fig. 5: another schematic top view of a pipe of the offshore device shown in Fig. 1 while being moved into a gap with an open end, and
- Fig. 6: another schematic top view of a pipe of the offshore device shown in Fig. 1 while being moved into a gap with two different sized sections.

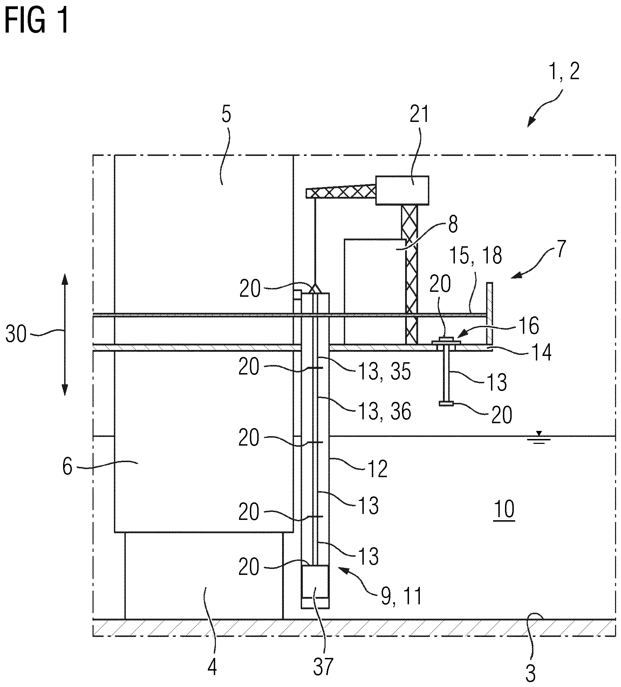

Fig. 1 shows an exemplary embodiment of a stationary offshore device 1 according to the present invention. The offshore device 1 is a wind turbine 2 which is fixated to the seabed 3 by a monopile 4. Between the monopile 4 and a tower 5 of the wind turbine 2, a transition piece 6 is provided. The offshore device 1 further comprises a platform 7 which is carried by the monopile 4. The platform 7 comprises a deck structure 14 and a floor structure 15 which constitutes respective layers of the platform 7. The deck structure 14 carries the floor structure 15. The floor structure 15 comprises a floor grating 18 and constitutes a working area for personnel of the offshore device 1. The deck structure 14 provides the structural stability of the platform 7, wherein pipes and cables are arranged on the deck structure 14 and, thus, within a clearance between the deck structure 14 and the floor structure 15.

The offshore device 1 further comprises a hydrogen generator 8 which uses energy generated by the wind turbine 2 for hydrogen generation. To provide water for the hydrogen generation a conveying arrangement 9 is provided which is adapted to convey seawater 10 from the sea to the hydrogen generator 8. Hence, the conveying arrangement 9 constitutes a vertical rise pipe 11 which is provided in a caisson 12 and which comprises several pipes 13 which are mounted together and about each other, as well as a pump 37 to pump the seawater 10 up through the pipes 13 to the platform 7. Each pipe 13 has a straight extent and comprises two opposed longitudinal ends 19 each having a flange 20. In the functional state, each pipe 13 constitutes a component of the conveying arrangement 9, wherein two adjacent pipes 13 are mounted together and about each other by means their flanges 20.

From time to time, the conveying arrangement 9 needs to be maintained, particularly cleaned. During the maintenance, the pipes 13 of the conveying arrangement 9 are typically required in a dismounted state. In this condition, the pipes 13 are stored on the platform 7 such they require as little working area as possible. Concretely, the pipes 13 are not stored on but below the floor structure 15. Suspension devices 16 are provided, each holdsing one of the pipes 13 being in the storing state. In this state, the pipes 13 are suspended from the platform 7 of the offshore device 1. As shown in fig. 1, one of the pipes 13, namely the pipe 13 on the right side of the platform 7, has already been dismounted from the remaining conveying arrangement 9 and brought into the storing state where its upper flange 20 rests on the respective suspension device 16 which again is carried by or a part of the deck structure 14. Details regarding the process of dismounting the pipes 13 will be described later. Being in the storing state, a significant part of the pipe 13 is arranged below the platform 7 and, hence, between the platform 7 and a sea level 17. Being in the storing state, the pipe 13 is removably held by the respective suspension device 16.

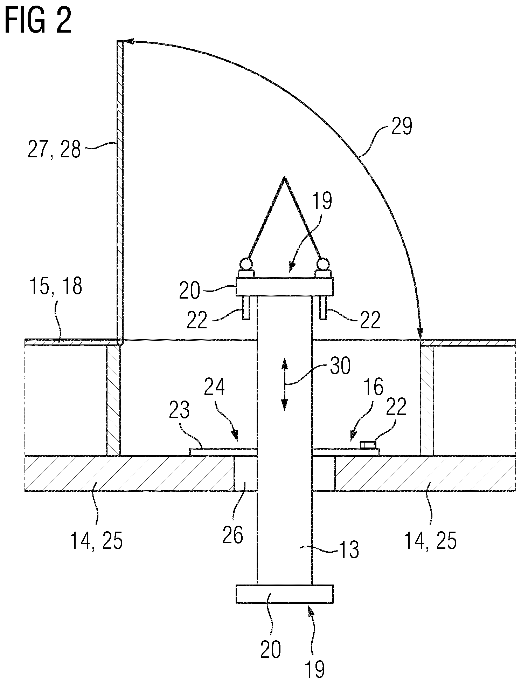

Fig. 2 shows one of the pipes 13 which has been dismantled from the conveying arrangement 9 and which is about to be brought into the storing state. For lifting and moving, the pipe 13 is attached to a crane 21 of the offshore device 1 by means of bolts 22 being arranged in bores of the flange 20.

The floor structure 15 which comprises the floor grating 18 further comprises an opening device 27 which is a hatch 28. The hatch 28 is constituted by one of several floor plates of the floor grating 18. In a closed state, which is not shown in the figures, the opening device 27 covers the suspension device 16, particularly in vertical direction, which is indicated by an arrow 30, to complete the floor structure 15. In order to store the pipe 13, the opening device 27 is moved from the closed state into an open state in which it provides access to the suspension device 16. The open state is shown in figure 2. To provide access to the suspension device 16, the opening device 27 can also be completely removable from the remainder of the floor structure 15.

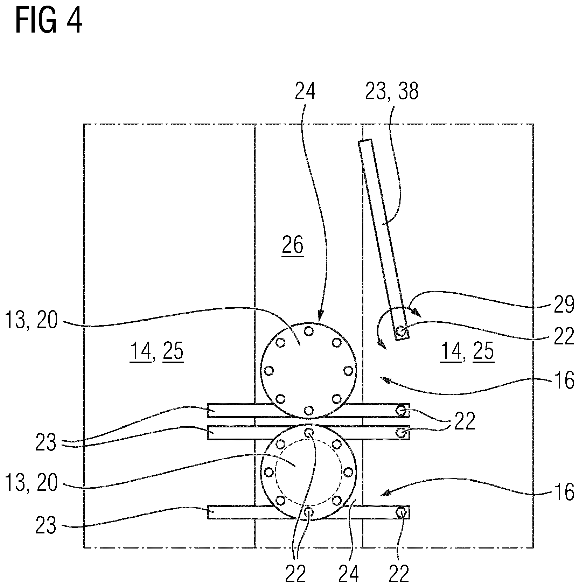

Each of the two suspension devices 16 comprises two plate- or bar-like holding members 23, which can be seen in fig. 4. Each of the pairs of the holding members 23 has a space or gap 24 in between and is used for storing one of the pipes 13. Additionally, the deck structure 14 embodies a supporting device 25 which comprises a gap-like opening 26 and which carries the holding members 23. Holding members 23 are movably attached to the supporting device 25 by means of a bolt 22 provided at one respective end of each holding member 23. This movable attachment can be seen in the top view of fig. 4 with the uppermost of the holding members 38 shown being in the opening position. The holding members 23 can be horizontally rotated, respectively pivoted, (see arrow 29) between an opening position in which they do not extend over the opening 26 and a holding position in which they do extend over the opening 26. By moving one or both holding members 23, the size of the space or gap 24 can be adjusted, which eases the storing of the pipes 13.

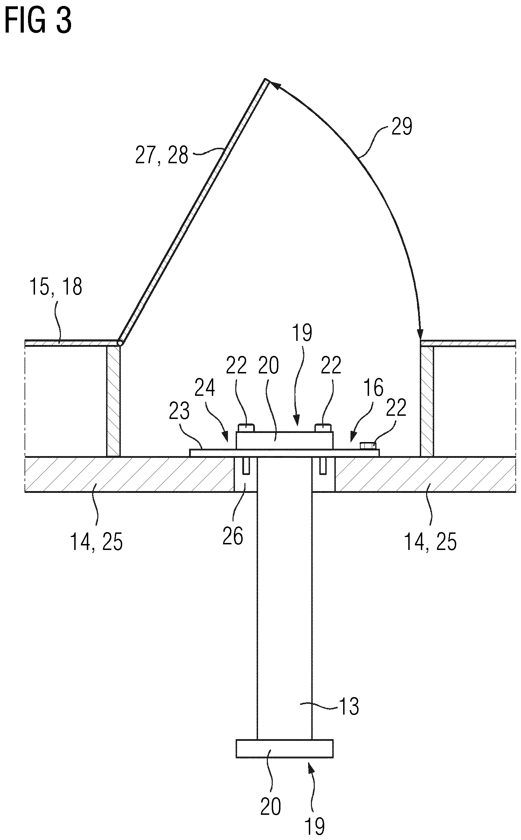

When or before the pipe 13 is moved into the storing state, the opening device 27 is moved into the open state and the pipe 13 is lowered through the floor structure 15. The holding members 23 are moved into the opening position to provide a space or gap 24 which is big enough so that the pipe 13 with its flange 20 at its lower longitudinal end 19 can be moved through the gap 24. Fig. 2 shows the dismantled pipe 13 being vertically lowered with one longitudinal end 19 through the floor structure 15, i.e., through the gap 24 and the opening 26. In this state, the holding members 23 are moved into the holding position by rotating the holding members 23 to the pipe 13 until they slightly touch the pipe 13. Next, the pipe 13 is lowered until its upper flange 20 comes to rest upon the holding members 23. In the storing state, which is shown in fig. 3, the pipe 13 hangs through the gap 24 of the suspension device 16 and the through the opening 26 of the supporting device 25, wherein the upper flange 20 rests on the holding members 23.

To provide additional fixation, the pipe 13 being in the storing state is fixated to the suspension device 16 by means of two bolts 22. Preferably, bores of the upper flange 20 are used to fixate the pipe 13 to the suspension device 16 by means of the bolts 22.

After the pipe 13 was brought into the storing state, the opening device 27 is moved back into the closed state to cover the suspension device 16 and the pipe 13 or its flange 20, respectively.

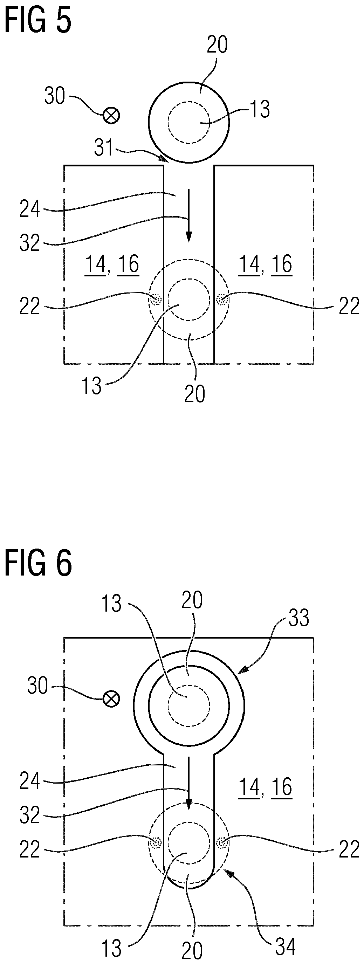

Figures 5 and 6 show alternative embodiments, in which the suspension device 16 is completely provided by components of the deck structure 14. Hence, no additional beams or plates are needed to provide the holding members 23. In figures 5 and 6, the holding members 23 are one or several components of the deck structure 14 and are not movable. The gap 24 is a gap in the deck structure 14 and is used to hang the pipe 13.

In fig. 5, the gap 24 comprises, regarding its longitudinal extend, an open end 31. In order to store the pipe 13, it is positioned outside of the gap 24 and in front of its open end 31. It is vertically lowered (see arrow 30) and positioned such that its lower longitudinal end 19 is arranged vertically below the gap 24. Next, the pipe is horizontally moved (see arrow 32) into the gap 24 in which it is subsequently lowered in vertical direction such that its upper flange 20 comes to rest upon the holding members 23 or the deck structure 14, respectively.

Referring to fig. 6, the gap 24 comprises, regarding its longitudinal extend, a broad section 33 and a narrow section 34. In order to bring the pipe 13 into the storing state, it is vertically lowered (see arrow 30) such that one of its longitudinal ends 19 is lowered through the gap 24 in the broad section 33. Next, the pipe 13 is horizontally moved (see arrow 32) into the narrow section 34 of the gap 24. Next, it is lowered such that its upper flange 20 comes to rest upon the holding members 23 or the deck structure 14, respectively.

The pipe 13 being in the storing state is indicated by dashed lines in fig. 5 and 6. It can be seen that the pipe 13 is stored by making use of the different radii of the flange 20 and the remaining pipe 13 in combination with the respectively sized gap 24. Apart from the pipe 13 itself and the deck structure 14, no further components are required to store the pipe 13. Being in the storing state, the pipe 13 may, however, be fixated to the deck structure 14 by means of two or more fixating means, like bolts or pins or the like.

Referring to fig. 1 again, the process of successively dismounting the pips will be described in the following. The conveying arrangement 9 comprises a plurality of pipes 13 which are, when being in the functional state, mounted together and about each other by means of their respective flanges 20. For maintenance, in particular cleaning, the conveying arrangement 9 is dismantled and the pipes 13 of the conveying arrangement 9 are stored such as described above. For this, the pipes 13 are dismounted successively by firstly dismounting the currently uppermost pipe 13 which in fig. 1 is pipe 35. To dismount the pipe 35, the conveying arrangement 9 is vertically lifted (see arrow 30) using the crane 21 such that the connection to the adjacent pipe 13, which in fig. 1 is pipe 36, is accessible from the outside of the caisson 12 and for personnel being on the working area provided by the floor structure 15. To lift the conveying arrangement 9, the currently uppermost pipe 35 is fixated to the crane 21 by means of its upper flange 20, just like shown in fig. 2. After the conveying arrangement 9 is lifted, it is vertically secured by means of securing members (not shown) like bars or plates which are similar or equal to the holding members 23 such that the flange 20 of pipe 36 rests upon the securing members which rest upon the caisson 12. Next, the uppermost pipe 35 is dismounted from the remainder of the conveying arrangement 9, i.e., from the pipe 36, and is brought into the storing state by means of the crane 21 in one of the possible ways described above. This process is repeated until all pipes 13 of the conveying arrangement 9 are moved into the storing state.

Being in the storing state, the pipes 13 are cleaned. For cleaning the pipes 13, it is beneficial that the pipes 13 are not stored on the floor structure 15, since the dirt can directly fall down into the sea 10.

Once the maintenance, e.g., the cleaning, of the pipes 13 has been finished, they can be removed from the storing state and be brought into the functional state again. For this, the steps described above can be performed in reverse order.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for storing at least one pipe (13) of a stationary offshore device (1), particularly being a wind turbine (2), by bringing the at least one pipe (13) from a functional state into a storing state, wherein the method comprises the following steps:
- dismounting the at least one pipe (13) being in the functional state in which it constitutes a component of a conveying arrangement (9) for conveying a fluid through the at least one pipe (13),
- bringing the at least one pipe (13) into the storing state in which it is removably held by at least one suspension device (16) such that the at least one pipe (13) is suspended from a platform (7) of the offshore device (1).

2. Method according to claim 1, **characterized in that** the at least one pipe (13) comprises at least one flange (20), wherein the flange (20) or one of the flanges (20) of the at least one pipe (13) being in the storing state rests on at least one holding member (23) of the at least one suspension device (16).

3. Method according to claim 2, **characterized in that** the at least one pipe (13), having particularly a straight extent, comprises two flanges (20) being arranged on its opposed longitudinal ends (19).

4. Method according to claim 2 or 3, **characterized in that** the at least one suspension device (16) comprises two plate- or bar-like holding members (23) having a gap (24) in between, wherein the at least one pipe (13) being in the storing state hangs through the gap (24).

5. Method according to claim 3 and 4, **characterized in that**
- the gap (24) comprises, regarding its longitudinal extent, a broad section (33) and a narrow section (34), wherein one of the longitudinal ends (19) of the at least one pipe (13) is lowered through the gap (24) in the broad section (33), wherein the at least one pipe (13) is moved into the narrow section (34), wherein the at least one pipe (13) is lowered such that the flange (20) or one of the flanges (20) comes to rest upon the holding members (23), or
- the gap (24) comprises, regarding its longitudinal extent, at least one open end (31), wherein the at least one pipe (13) is positioned outside of the gap (24) and in front of its open end (31), wherein the at least one pipe (13) is moved into the gap (24), wherein the at least one pipe (13) is lowered such that the flange (20) or one of the flanges (20) comes to rest upon the holding members (23).

6. Method according to claim 4, **characterized in that** the at least one suspension device (16) comprises a supporting device (25) which comprises an opening (26) and which carries the holding members (23), wherein at least one of the holding members (23) is movably attached on the supporting device (25), wherein one of the longitudinal ends (19) of the at least one pipe (13) is lowered through the gap (24) and through the opening (26), wherein the at least one of the holding members (23) being movably attached on the supporting device (25) is moved into a holding position such that the subsequent lowering of the at least one pipe (13) ends up such that the flange (20) or one of the flanges (20) comes to rest upon the holding members (23) and the at least one pipe (13) hangs through the gap (24) and through the opening (26).

7. Method according to claim 6, **characterized in that** the supporting device (25) comprises two support beams or support plates having the opening (26) in between, wherein one end of the at least one of the holding members (23) being movably attached on the supporting device (25) is pivotably attached to one of the support beams or support plates.

8. Method according to one of the preceding claims, **characterized in that** the platform (7), which is particularly carried by at least one pile (4), comprises a deck structure (14) and a floor structure (15) which constitute several, particularly horizontal, layers of the platform (7), wherein the deck structure (14) carries the floor structure (15), wherein at least a part of the at least one suspension device (16), particularly the support beams or support plates, is constituted by at least one component of the deck structure (14) .

9. Method according to claim 8, **characterized in that** the floor structure (15) comprises at least one opening device (27), being or comprising particularly a hatch (28), wherein the opening device (27) is brought from a closed state, in which it covers the at least one suspension device (16), into an open state, in which it provides access to the at least one suspension device (16), hereafter the at least one pipe (13) is brought into the storing state.

10. Method according to one of the preceding claims, **characterized in that** the at least one pipe (13) being in the storing state is fixated to the at least one suspension device (16), particularly by a bolt (22) and/or a pin.

11. Method according to one of the preceding claims, **characterized in that** the conveying arrangement (9) comprises a plurality of pipes (13) which are, when being in the functional state, mounted together and about each other, wherein the pipes (13) are dismounted successively by firstly dismounting the uppermost pipe (35) and then lifting the remaining pipe (13) or pipes (13), wherein this step is repeated until all pipes (13) are dismounted.

12. Method according to one of the preceding claims, **characterized in that** the at least one pipe (13) being in the storing state is cleaned.

13. Stationary offshore device (1), particularly being a wind turbine (2), comprising at least one pipe (13) which can be brought from a functional state into a storing state, wherein the at least one pipe (13) being in the functional state is dismountable and constitutes a component of a conveying arrangement (9) of the offshore device (1) for conveying a fluid through the at least one pipe (13), wherein the at least one pipe (13) being in the storing state is removably held by at least one suspension device (16) such that the at least one pipe (13) is suspended from a platform (7) of the offshore device (1).

14. Stationary offshore device (1) according to claim 13, **characterized in that** the conveying arrangement (9) is adapted to convey sea water (10) from the sea to a hydrogen generator (8) of the offshore device (1).

15. Stationary offshore device (1) according to one of the claims 12 or 14, **characterized by** a pile which is arranged on and/or anchored in the seabed (3) and which carries the platform (7).
